# EUROPEAN PATENT SPECIFICATION

(11) **EP 1 390 555 B1**
(45) Date of publication and mention of the grant of the patent: **30.03.2011**
(21) Application number: 02733701.3
(22) Date of filing: 17.05.2002
(51) Int. Cl.: C23C 4/06, C23C 4/08

(54) **METAL POWDER FOR THERMAL COATING OF SUBSTRATES**
METALLPULVER FÜR DAS THERMISCHE BESCHICHTEN VON SUBSTRATEN
POUDRE METALLIQUE POUR LE REVETEMENT DE SUBSTRATS PAR UN PROCEDE THERMIQUE

(30) Priority: 18.05.2001 SE 0101776
(43) Date of publication of application: 25.02.2004
(73) Proprietor: HÖGANÄS AB, 263 83 Höganäs (SE)
(72) Inventor: HOLMQVIST, Ulf, SE-26373 JONSTORP (SE); HALLEN, Hans, B-1640 Waterloo (BE)
(74) Representative: Andersson, Mikael Per Robert
(86) International application number: PCT/SE2002/000943
(87) International publication number: WO 2003/042422

(56) References cited:
- WO-A1-01/32946
- JP-A- 3 264 642
- JP-A- 8 209 202
- JP-A- 63 137 102
- US-A- 4 561 892
- US-A- 4 954 171
- US-A- 6 095 107

## Description

### FIELD OF THE INVENTION

The present invention concerns use of thermal spray powders. Specifically the invention concerns use of the spray powders for thermal coating of aluminium substrates.

### BACKGROUND OF THE INVENTION

Different methods for producing coatings on aluminium substrates are previously known. These methods are used in eg aluminium engine block having cylinder liners which are formed by thermal spraying.

U.S. Pat. No. 2,588,422 discloses an aluminum engine block having cylinder liners which are formed by thermal spraying. These liners are built up in two layers on the untreated surface of the engine block, the top layer being a hard slide layer such as steel about 1 mm in thickness and the lower layer being a molybdenous interlayer about 50 microns in thickness. The interlayer, containing at least 60% molybdenum, does not constitute a slide layer, but is necessary in order to bind the hard slide layer to the aluminum block. Preferably, the interlayer is made up of pure molybdenum. The slide layer is a layer of hard metal, as for example carbon steel, bronze or stainless steel, in which the steel may be an alloy containing nickel, chromium, vanadium or molybdenum for example. In principle, this two-layer structure provides a good slide layer, but the cost of the double coating is substantial.

In recent thermal spraying methods the thermal spray powders are made up by a mixture of powdered steel with powdered modybdenum such as described in the US patent 6 095 107. The risk of segregation due to differences in properties between the base steel powder and the powder of crushed molybdenum is however a problem which may re-sult in non-uniform coatings. Another disadvantage is that comparatively large amounts of molybdenum are required due to the segregation effect.

### OBJECTS OF THE INVENTION

A main object of the present invention is to provide use of an inexpensive metal powder for thermal coating of aluminium substrates.

Another object is to provide use of a powder which does not segregate and wherein the amount of expensive molybdenum alloying metal can be reduced in comparison with currently used methods.

A further object is to provide use of a thermal powder, which has high deposition efficiency and gives excellent coating quality.

Another object is to provide use of a thermal powder giving coatings of suitable porosity and oxide content and wherein the pores are predominantly closed, isolated and have an advantageous range of pore diameters.

### SUMMARY OF THE INVENTION

These objects are obtained by use of a metal powder comprising a pre-alloyed iron base powder having particles of molybdenum, such as reduced molybdenum trioxide, diffusion alloyed to the particles of the base powder.

According to the present invention there is provided a use of a metal powder for thermal coating of aluminium substrates, said powder consisting of pre-alloyed iron base powder particles having molybdenum particles diffusion alloyed to the base powder particles, wherein the molybdenum particles originate from reduced molybdenum trioxide and wherein the amount of molybdenum diffusion alloyed to the particles of the base powder is between 4 and 10 % by weight of the metal powder.

### DETAILED DESCRIPTION OF THE INVENTION

The type and particle size of the iron base powder is selected in view of the desired properties of the final coating and the substrate. The base powders are preferably pre-alloyed with elements desired in the coating. Also a minor part of the molybdenum content may be included in the pre-alloyed powder. Other elements which may be included in the pre-alloyed base powder are C, Si, Mn, Cr, V and W. The pre-alloyed powder may be prepared by atomisation with water or gas. The particle sizes of the base powder are below 500 µm preferably between 25 and 210 µm for PTA and less than 90 µm, preferably less than 65 µm for HVOF or plasma spraying.

According to the present invention the base powder and the alloying powder, i.e. the source of the alloying element, which is preferably molybdenum trioxide, are mixed according the prescribed formulation and the mixture is heated to a temperature below the melting point of the obtained mixture. The temperature should be sufficiently high to ensure adequate diffusion of the alloying element into the iron base powder in order to form a partially or diffusion alloyed powder. On the other hand the temperature should be lower than the temperature required for complete pre-alloying. Usually the temperature is between 700° and 1000°C, preferably between 750° and 900°C, and the reduction is performed in a reducing atmosphere, e.g. hydrogen, for a period of 30 minutes to 2 hours for reduction of the molybdenum trioxide, which is a preferred molybdenum source. As an alternative molybdenum source metallic molybdenum may be used. In this context it may be mentioned that metal powders having molybdenum diffusion alloyed to the base powder particles are previously known from e.g. the Japanese patent publications 8-209 202, 63-137102 and 3-264 642. These known powders are, however, used within the powder metallurgical industry for producing sintered products of various shapes and sizes. Furthermore, and in contrast to the powders according to the present invention, these known powders often have not only molybdenum but also copper and/or nickel diffusion alloyed to the base powder particles. In these known powders the content of the diffusion alloyed molybdenum is usually low, whereas in the inventive powder for thermal coating the diffusion alloyed molybdenum should be high in order to obtain an efficient sliding. So far the most interesting results have been obtained with powders having a content of diffusion alloyed molybdenum above about 4% by weight. It should also be observed that only molybdenum is diffusion alloyed to the base powder particles in the powder used for thermal spraying according to the present invention. The upper limit of this diffusion alloyed molybdenum is decided by how much molybdenum the base particles can carry which seems to be about 15 % by weight, see below.

The particle size of the final thermal spray powder is essentially the same as that of the pre-alloyed base powder as the molybdenum particles which are obtained when the molybdenum trioxide is reduced are very small in comparison with the particles of the base powder. The amount of the Mo which is diffusion alloyed to the base powder should be at least 2 % by weight of the total powder composition. Preferably the amount of Mo should be between 2 and 15 and most preferably between 3 and 10 % by weight.

The different methods for applying the diffusion alloyed powders on the metal base substrate are spray or weld cladding process, such as flame spray, HVOF and plasma spray or PTA.

The invention is further illustrated by, but should not be limited to, the following preparation and example.

### Example

For the experiment on the new material for thermal coating based on water atomised Fe based (Fe-3Cr-0,5Mo) +5% Mo.

Used base materials and chemical analysis:

Water atomised iron powder (Fe-3Cr-0,5Mo)-71 µm Molybdenum trioxide Mo0₃ (Average particle size 3-7 µm)

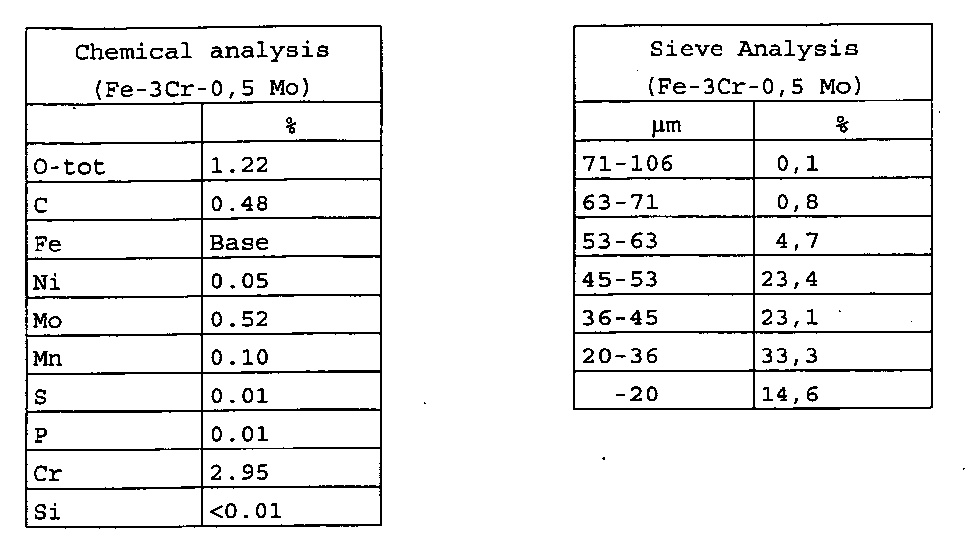

### Procedure

92,46% of the water atomised (Fe-3Cr-0,5Mo powder) and 7,54% of Mo0₃ were mixed together in a Lödige mixer and the annealing was carried out as follows: Temperature: 820°C
Time: 60 min
Atmosphere: Reduced atmosphere (type H₂,N₂, CO₂ and mixes of these gases)

After annealing the powder cake was crushed and sieved to a particle size below 75 µm.

Sieve analysis and chemical composition (powder mix after annealing):

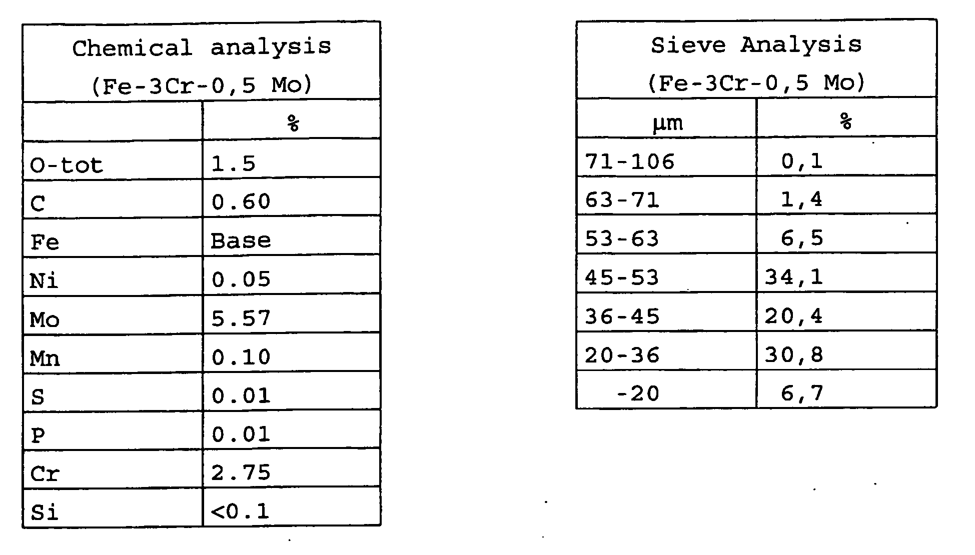

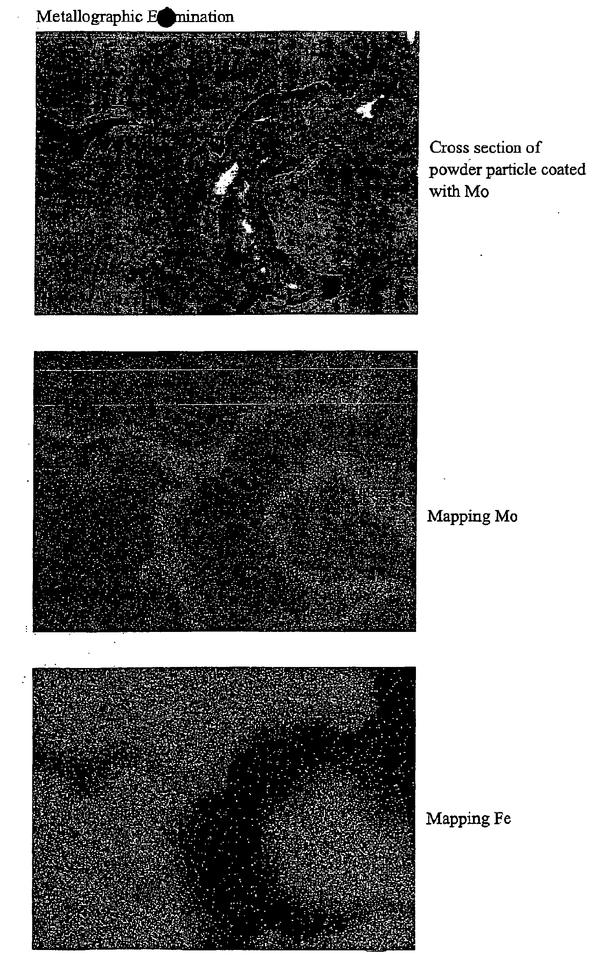

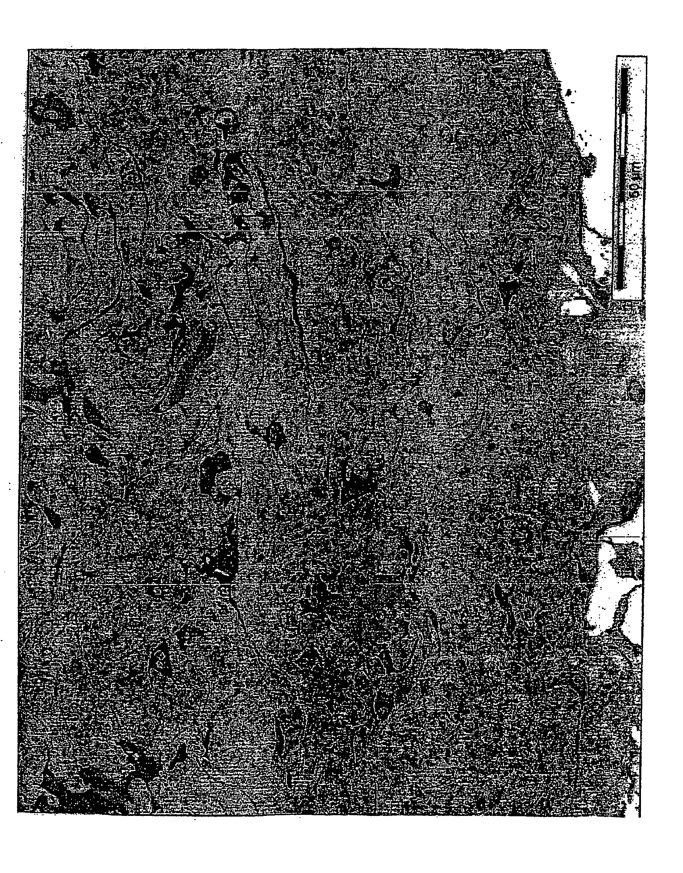

The obtained powder was used in a plasma spraying process for coating an Al base substrate. An unexpectedly homogenous and excellent coating was obtained with a minimum amount of Mo. Figure 1 is a micrograph of this powder having molybdenum diffusion alloyed to the surface of the base powder particles. Figure 2 discloses the coating.

## Claims

1. Use of a metal powder for thermal coating of aluminium substrates, said powder consisting of pre-alloyed iron base powder particles having molybdenum particles diffusion alloyed to the base powder particles,
wherein the molybdenum particles originate from reduced molybdenum trioxide and wherein the amount of molybdenum diffusion alloyed to the particles of the base powder is between 4 and 10 % by weight of the metal powder.

2. Use of a metal powder for thermal coating of aluminium substrates according to claim 1, wherein the pre-alloyed base powder is a gas-atomised powder.

3. Use of a metal powder for thermal coating of aluminium substrates according to claim 1, wherein the pre-alloyed base powder is a water-atomised powder.

4. Use of a metal powder for thermal coating of aluminium substrates according to any one of the claims 1-3 , wherein the pre-alloyed base powder includes at least one of the elements selected from the group consisting of carbon, silicon, manganese, chromium, molybdenum, vanadium and tungsten.

5. Use of a metal powder for thermal coating of aluminium substrates according to any one of the claims 1-4, having a particle size below 500µm, preferably between 25 and 210 µm.

6. Use of a metal powder for thermal coating of aluminium substrates according to any one of the claims 1-5, having a particle size below 90µm, preferably below 65µm.

## Patentansprüche

1. Verwendung eines Metallpulvers zum thermischen Beschichten von Aluminiumsubstraten, wobei das Pulver aus vorlegierten Pulverteilchen auf Eisenbasis besteht, bei denen durch Diffusionslegierung Molybdänteilchen zu den Grundpulverteilchen legiert sind,
wobei die Molybdänteilchen aus reduziertem Molybdäntrioxid stammen und die Menge des Molybdäns, das durch Diffusionslegierung zu den Teilchen des Grundpulvers legiert wird, 4 bis 10 Massen-% des Metallpulvers beträgt.

2. Verwendung eines Metallpulvers zum thermischen Beschichten von Aluminiumsubstraten nach Anspruch 1, wobei es sich bei dem vorlegierten Grundpulver um ein mit Gas zerstäubtes Pulver handelt.

3. Verwendung eines Metallpulvers zum thermischen Beschichten von Aluminiumsubstraten nach Anspruch 1, wobei es sich bei dem vorlegierten Grundpulver um ein mit Wasser zerstäubtes Pulver handelt.

4. Verwendung eines Metallpulvers zum thermischen Beschichten von Aluminiumsubstraten nach einem der Ansprüche 1 bis 3, wobei das vorlegierte Grundpulver mindestens eines der Elemente umfasst, die aus der Gruppe ausgewählt sind, die aus Kohlenstoff, Silicium, Mangan, Chrom, Molybdän, Vanadium und Wolfram besteht.

5. Verwendung eines Metallpulvers zum thermischen Beschichten von Aluminiumsubstraten nach einem der Ansprüche 1 bis 4, wobei das Pulver eine Teilchengröße von weniger als 500 µm, vorzugsweise von 25 bis 210 µm, aufweist.

6. Verwendung eines Metallpulvers zum thermischen Beschichten von Aluminiumsubstraten nach einem der Ansprüche 1 bis 5, wobei das Pulver eine Teilchengröße von weniger als 90 µm, vorzugsweise weniger als 65 µm, aufweist.

## Revendications

1. Utilisation d'une poudre métallique pour le revêtement thermique de substrats en aluminium, ladite poudre étant constituée de particules de poudre de base de fer préalliée ayant des particules de molybdène alliées par diffusion aux particules de poudre de base,
lesdites particules de molybdène provenant de trioxyde de molybdène réduit et la quantité de molybdène allié par diffusion aux particules de poudre de base étant comprise entre 4 et 10 % en poids de la poudre métallique.

2. Utilisation d'une poudre métallique pour le revêtement thermique de substrats en aluminium selon la revendication 1, la poudre de base préalliée étant une poudre pulvérisée au gaz.

3. Utilisation d'une poudre métallique pour le revêtement thermique de substrats en aluminium selon la revendication 1, la poudre de base préalliée étant une poudre pulvérisée à l'eau.

4. Utilisation d'une poudre métallique pour le revêtement thermique de substrats en aluminium selon l'une quelconque des revendications 1 à 3, la poudre de base préalliée comprenant au moins l'un des éléments sélectionnés dans le groupe constitué par le carbone, le silicium, le manganèse, le chrome, le molybdène, le vanadium et le tungstène.

5. Utilisation d'une poudre métallique pour le revêtement thermique de substrats en aluminium selon l'une quelconque des revendications 1 à 4, ayant une taille des particules inférieure à 500 µm, de préférence comprise entre 25 et 210 µm.

6. Utilisation d'une poudre métallique pour le revêtement thermique de substrats en aluminium selon l'une quelconque des revendications 1 à 5, ayant une taille des particules inférieure à 90 µm, de préférence inférieure à 65 µm.
